# DEMANDE DE BREVET EUROPEEN

(11) **EP 1 897 768 A1**
(43) Date de publication de la demande: **12.03.2008**
(21) Numéro de dépôt: 07301341.9
(22) Date de dépôt: 06.09.2007
(51) Int. Cl.: B60S 1/04

(54) **Dispositif de montage d'un système d'essuyage d'un pare-brise de véhicule par l'intermédiaire d'un plot de filtration et procédé d'assemblage d'un tel dispositif**

(30) Priorité: 07.09.2006 FR 0607837
(71) Demandeur: Renault SAS, 92100 Boulogne Billancourt (FR)
(72) Inventeur: Verneuil, Pascal, 78460 CHEVREUSE (FR)

(57) **Abrégé**

La présente invention concerne un dispositif de montage d'un système d'essuyage de véhicule automobile comportant une platine de fixation (1) qui est montée sur un véhicule automobile par l'intermédiaire d'une entretoise de serrage (7), maintenue serrée contre la carrosserie (10) d'un véhicule automobile et d'un plot de filtration (5), en matériau élastiquement déformable et capable d'absorber les vibrations, qui contient l'entretoise (7) et dont la surface externe comporte une gorge (61), qui coopère avec le bord d'une ouverture ménagée dans la platine (1). Selon l'invention, la platine (1) comporte, en outre, une paroi de rigidification (43) qui épouse au moins partiellement la surface externe du plot (5) et forme un logement, moyennant quoi l'amplitude des déformations dudit plot de filtration (5) est limitée à l'intérieur dudit logement.

## Description

La présente invention concerne un dispositif de montage d'un système d'essuyage d'un pare-brise avant ou arrière d'un véhicule automobile.

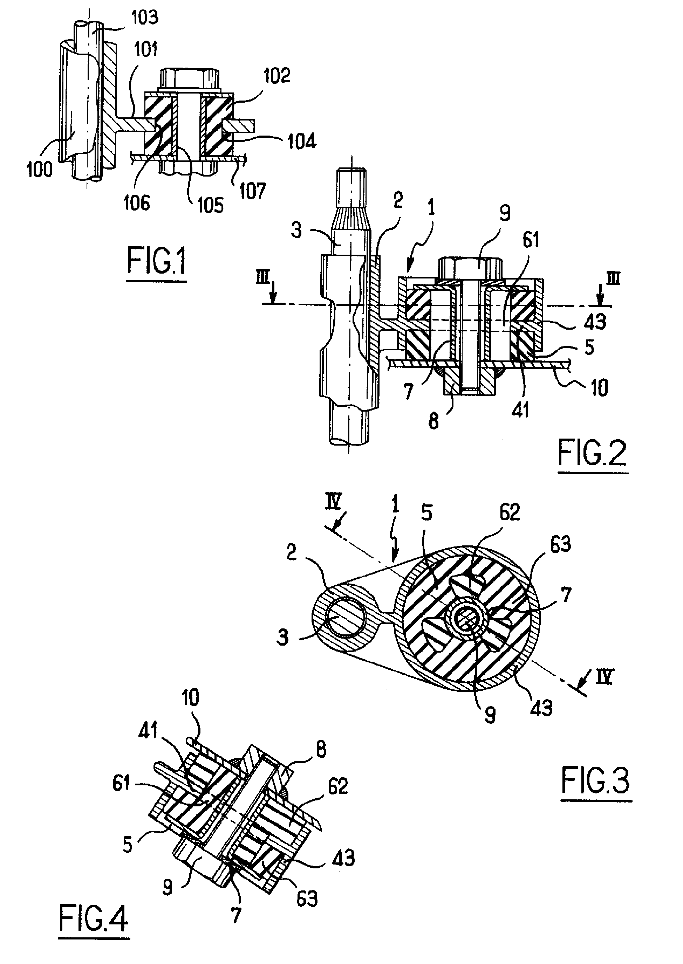

Les systèmes d'essuyage avant et arrière des véhicules automobiles comportent un mécanisme d'entraînement qui comprend au moins un axe d'entraînement. Comme représenté sur la figure 1, cet axe d'entraînement 103 est monté dans un palier 100 qui est disposé à l'extrémité d'une platine 101, qui sert à la fixation du système d'essuyage sur la carrosserie 107 du véhicule. La fixation de la platine 101 est mise en oeuvre au moyen d'un plot de filtration 102, qui sert également à amortir les vibrations dues au moteur et les mouvements transmis, par l'axe et tout le système d'essuyage en mouvement (balai essuie-glace etc.), à la platine 101.

Comme représenté sur la figure 1, le plot 102 est un corps, sensiblement cylindrique, en matériau élastiquement déformable et capable d'absorber les vibrations, à la surface duquel est ménagée une gorge annulaire 104. Une entretoise interne 105, rigide, est disposée longitudinalement à l'intérieur du plot 102. Le plot 102 est monté par déformation dans une ouverture ménagée dans la platine 101, de manière à ce que la gorge 104 coopère avec le bord 106 de cette ouverture. Le matériau élastiquement déformable constituant le corps du plot 102 doit être suffisamment souple pour absorber les vibrations provenant du moteur et en même temps, suffisamment rigide, afin de contrecarrer les mouvements de la platine 101. En effet, celle-ci, entraînée par le système d'essayage, génère des phénomènes d'amplification de la trajectoire des balais d'essuie-glace qui viennent alors frapper les montants du pare-brise, ce qui détériore le système d'essuyage entier. La dureté Shore du matériau du plot ne permet pas un bon compromis entre la filtration des vibrations et la réduction des phénomènes d'amplification précités et on choisit, en général, de limiter ces derniers, au détriment d'une bonne filtration des vibrations.

Par ailleurs, le matériau choisi présente une dureté telle qu'il impose, pour le montage du plot de filtration dans la platine, à la fois la torsion et le pressage du plot. Cette opération requiert un outillage imposant qui demande une place importante autour de l'ouverture dans laquelle est monté le plot.

Le document US5960512 propose un dispositif qui comprend une platine dans laquelle est ménagé un logement pour le plot. Le logement comporte une nervure annulaire qui le divise en deux compartiments et qui coopère avec la surface externe du plot. Une entretoise longitudinale est disposée dans le logement et retenue au bord de la nervure par une pluralité de bras. Le plot n'est plus inséré dans le logement mais directement formé dans ce dernier. Le logement sert de moule au plot, dont le matériau est coulé ou injecté dans le logement, entre la surface interne de ce dernier et la surface externe de l'entretoise précitée. Le plot peut éventuellement être formé de deux parties, injectées ou moulées séparément, chacune dans un des compartiments du logement. La platine et le plot qui y est intégré, peuvent ensuite être utilisés directement sans autre montage. Ce procédé est techniquement compliqué et nécessite un appareillage spécifique du fait de l'injection du matériau formant le plot. Il ne peut donc être facilement mis en oeuvre, en particulier sur les lieux d'assemblage des véhicules. De plus, les bras qui soutiennent l'entretoise gênent la filtration des vibrations.

Un but de la présente invention est de proposer un dispositif de montage d'un système d'essuyage d'un véhicule automobile par l'intermédiaire d'un plot de filtration qui permet une limitation efficace des phénomènes d'amplification de la trajectoire des balais essuie-glace précités tout en assurant une bonne filtration des vibrations.

Ce but est atteint au moyen d'un dispositif de montage d'un système d'essuyage de véhicule automobile comportant, de manière connue, une platine de fixation qui est montée sur un véhicule automobile par l'intermédiaire d'une entretoise de serrage, maintenue serrée contre la carrosserie d'un véhicule automobile et d'un plot de filtration, en matériau élastiquement déformable et capable d'absorber les vibrations, qui contient l'entretoise, disposée longitudinalement, dont la surface externe comporte une gorge, sensiblement perpendiculaire à l'entretoise et qui coopère avec le bord d'une ouverture ménagée dans la platine pour la fixation du plot sur la platine. Selon l'invention, la platine comporte, en outre, une paroi de rigidification qui épouse au moins partiellement la surface externe du plot et forme un logement, sensiblement perpendiculaire à la platine, divisé en deux compartiment par une nervure interne formée par le bord de l'ouverture ménagée dans la platine, moyennant quoi l'amplitude des déformations du plot de filtration est limitée à l'intérieur du logement.

Avantageusement, le plot est formé d'au moins deux parties s'imbriquant l'une dans l'autre.

Le plot étant formé de deux parties ou plus insérables par pressage, un dispositif simple et peu encombrant, comportant, par exemple, un vérin hydraulique, peut être utilisé, sur le lieu de montage du véhicule.

Avantageusement, au moins une des parties s'étend de part et d'autre de la nervure interne.

Avantageusement, le matériau élastiquement déformable est du caoutchouc naturel.

Avantageusement, le plot est formé de deux parties identiques qui comportent chacune une portion sensiblement cylindrique qui remplit un des compartiments du logement et comporte une ouverture sensiblement centrale pour l'entretoise et au moins deux passages d'assemblage, et cette portion sensiblement cylindrique se prolonge selon son axe longitudinal par au moins deux bras d'assemblage, longitudinaux et disposés autour de l'ouverture sensiblement centrale entre les bras d'assemblage et qui coopèrent avec les passages d'assemblage ménagés dans la portion sensiblement cylindrique de l'autre partie de manière à former par assemblage, le plot de filtration.

Avantageusement, chacune des parties comporte trois bras d'assemblage et trois passages d'assemblage.

La présente invention concerne également un procédé d'assemblage d'un dispositif de montage d'un système d'essuyage d'un véhicule automobile tel que précité selon lequel, de manière caractéristique, on insère, par pressage selon une direction sensiblement parallèle à la paroi de rigidification, au moins une des parties du plot dans le premier ou second compartiment du logement, délimités par la nervure interne, on insère, ensuite, au moins une autre partie dans le compartiment vide, par pressage, selon une direction sensiblement parallèle à la paroi de rigidification, et on introduit par pressage selon une direction sensiblement parallèle à la paroi de rigidification, l'entretoise de serrage dans le passage interne du plot formé par les deux parties assemblées dans le logement.

Selon un autre procédé, on insère l'entretoise de serrage dans l'ouverture sensiblement centrale ménagée dans une des parties, on insère, par pressage selon une direction sensiblement parallèle à la paroi de rigidification, l'ensemble formé par la partie et l'entretoise, dans un des deux compartiments du logement, délimités par la nervure interne, et on insère au moins une autre partie dans le compartiment vide, par pressage, selon une direction sensiblement parallèle à la paroi de rigidification de manière à ce que l'entretoise de serrage traverse le plot formé par les deux parties assemblées dans le logement.

La présente invention, ses caractéristiques et les divers avantages qu'elle procure apparaîtront mieux à la lecture de la description qui suit d'un mode de réalisation particulier qui fait référence aux dessins annexés et sur lesquels :
- la figure 1 représente une vue en coupe longitudinale d'une platine d'un dispositif de fixation selon l'art antérieur ;
- la figure 2 représente une vue en coupe, selon l'axe longitudinal du plot de filtration, d'une portion de la platine dans laquelle est monté le plot du dispositif de l'invention ;
- la figure 3 représente une vue en coupe transversale selon l'axe III-III du mode de réalisation de la figure 3 ;
- la figure 4 représente une vue en coupe selon l'axe N-IV du mode de réalisation de la figure 2 ;
- la figure 5 est une vue en perspective des deux parties formant le plot de filtration représenté sur les figures 2 à 4 ; et
- la figure 6 représente les courbes de raideur dynamique d'un plot selon l'art antérieur et d'un plot selon le dispositif de l'invention.

En référence à la figure 2, le dispositif de l'invention comporte une platine 1 qui comporte à une de ses extrémités un palier 2, sensiblement perpendiculaire à la platine 1, dans lequel est monté l'axe d'entraînement 3 du système d'essuyage. La platine 1 comporte, à son autre extrémité, une partie de fixation qui comprend un logement dans lequel est monté le plot de fixation 5. Ce plot 5 est un bloc sensiblement cylindrique, en matériau élastiquement déformable et capable d'absorber les vibrations, dont la surface externe comporte une gorge annulaire 61, disposée selon la circonférence du plot 5. Une entretoise de serrage 7, rigide, est disposée dans un passage interne, longitudinal et sensiblement central, ménagé à l'intérieur du plot 5. Le logement de la platine 1 est formé par une paroi de rigidification 43, solidaire de la platine 1, cylindrique et sensiblement perpendiculaire à la platine 1 et donc parallèle au palier 2, et une nervure 41 interne et annulaire, formée par le bord de l'ouverture dans laquelle est inséré le plot 5, et qui coopère avec la gorge annulaire 61 ménagée sur la surface de ce dernier. La paroi 43 s'étendant de part et d'autre de l'ouverture ménagée dans la platine 1 et de la nervure interne 41, cette dernière divise le logement en deux compartiments. Lorsque le plot 5 est monté dans l'ouverture de la platine 1, la paroi 43 vient épouser la surface externe du plot 5, qui se trouve ainsi inséré dans le logement, sa surface externe étant en étroit contact avec la surface interne de la paroi de rigidification 43. La coopération de la paroi 43 du logement avec le plot 5 sera plus amplement expliquée ultérieurement. Une vis 9 et un écrou 8 assurent, avec l'entretoise 7, la cohésion du plot 5 et sa fixation sur la carrosserie 10 du véhicule.

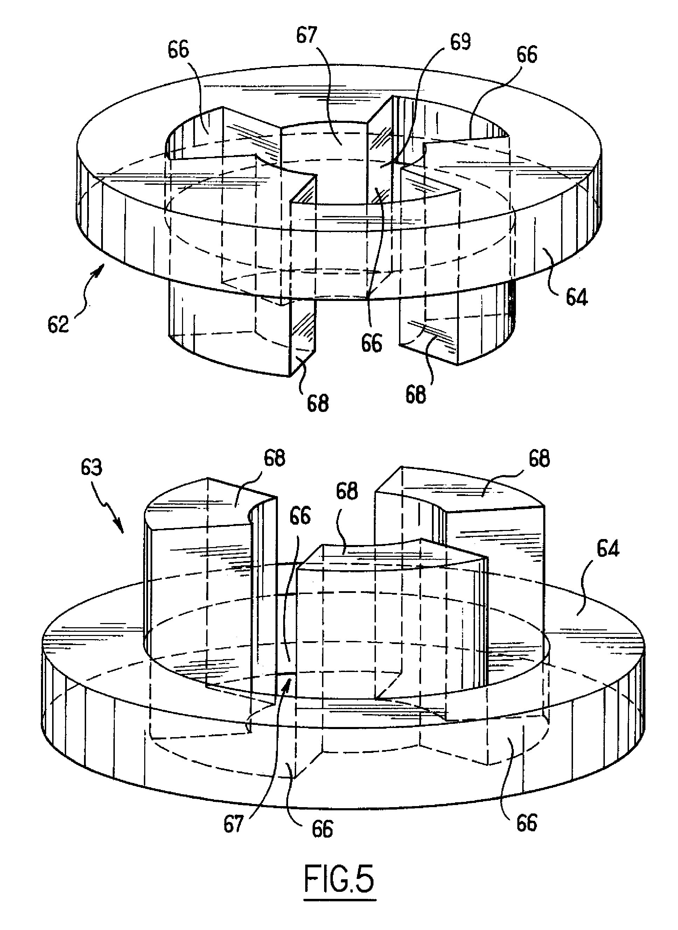

Comme représenté sur les figures 2 à 5, le plot 5 est formé de deux parties identiques 62 et 63 qui ont des formes complémentaires qui s'imbriquent l'une dans l'autre. Les deux parties 62 et 63 coopèrent intimement de manière à remplir tout le logement de la platine 1 et à former la gorge annulaire 61. Comme représenté sur la figure 5, chaque partie comporte une première portion 64, sensiblement cylindrique qui, lorsque le plot 5 est assemblé et inséré dans le logement de la platine 1, remplit un compartiment de ce logement et qui comporte une ouverture sensiblement centrale 67 pour le passage de l'entretoise 7 et trois passages d'assemblage 66 régulièrement repartis autour de l'ouverture sensiblement centrale 67. Chaque partie 62 et 63 comporte également trois bras d'assemblage 68, qui s'étendent selon l'axe longitudinal de la première portion sensiblement cylindrique 64 et qui sont régulièrement répartis autour de l'ouverture 67, entre les passages d'assemblage 66. Les bras d'assemblage 68 s'étendent également radialement par rapport à l'ouverture 67 sensiblement centrale pour l'entretoise de serrage 7. Lorsque le plot 5 est assemblé, les bras d'assemblage 68 d'une partie s'emboîtent dans les trois passages d'assemblage 66 de l'autre partie formant ainsi le plot 5 et son passage interne pour l'entretoise de serrage 7.

Les trois bras d'assemblage 68 de chacune des parties permettent une bonne imbrication des deux parties 62 et 63, facilitent leur insertion par pressage dans le logement de la platine 1 et les empêchent de bouger en rotation l'une par rapport à l'autre autour de l'axe longitudinal du plot 5 assemblé, du fait des efforts en cisaillement qu'elles subissent.

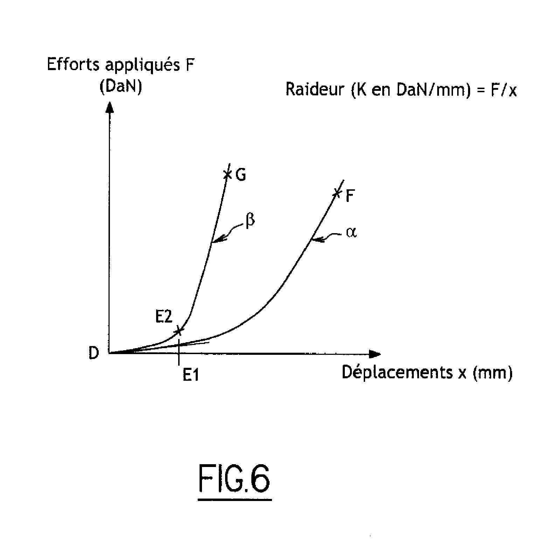

Le fonctionnement du dispositif de l'invention est le suivant. Le plot de fixation 5 travaille essentiellement en cisaillement selon la flèche F, représentée sur la figure 3. Sur la figure 6, la courbe α représente la raideur dynamique d'un corps de plot comportant une seule pièce, non contenue dans un logement, et dont le matériau constitutif présente une dureté et une raideur qui imposent la fixation du plot dans la platine par pressage et torsion, comme expliqué en référence à l'art antérieur. La courbe β représente la raideur dynamique du plot de fixation du dispositif de l'invention. Le matériau constitutif du corps est dans les deux cas le même. Dans la portion DE, le plot de fixation de l'invention présente une raideur dynamique faible comparable à un plot de l'art antérieur. Pour des petits déplacements du palier, encore appelés vibrations, le matériau élastiquement déformable formant le corps externe du plot est donc suffisamment souple pour amortir et absorber ces petites vibrations en s'écrasant dans le logement. On obtient donc une filtration acoustique (filtration des vibrations) aussi bonne ou meilleure que celle obtenue avec un plot existant tel que décrit dans l'art antérieur. Pour des déplacements plus importants du palier, qui conduisent aux phénomènes d'amplification précités, on remarque que la raideur du corps du plot du dispositif de l'invention est plus forte que celle d'un plot standard (portion E1F sur la courbe α et E2G sur la courbe β). Cette raideur accentuée vient en partie de la coopération entre le plot 5 et la paroi de rigidification 43 définissant le logement, qui empêche le plot 5 de se tordre et limite le cisaillement. De ce fait, la raideur du plot 5 étant plus grande, le palier 2 se déplace moins ce qui évite l'amplification précitée. La raideur du plot de l'invention peut également être ajustée en fonction de la forme des deux parties 62 et 63 composant le plot 5 et en fonction de la dureté et de la raideur du ou des matériaux élastiquemement déformables choisis pour former ces deux parties.

Le dispositif de l'invention comporte un plot qui, non seulement, assure une bonne filtration acoustique et une bonne résistance aux mouvements du palier empêchant ainsi le phénomène d'amplification précité, au niveau, notamment, des essuie-glace, mais qui, de plus, est facile à monter sur la platine.

En effet, l'assemblage du dispositif de l'invention est mis en oeuvre de la manière suivante (voir figure 2). La première partie 62 est introduite dans un premier compartiment, par pressage, par exemple, à l'aide d'un vérin hydraulique, selon une direction sensiblement parallèle au palier 2, c'est-à-dire sensiblement perpendiculaire à la platine 1, de manière à ce que la portion sensiblement cylindrique 64 de cette première partie 62 vienne remplir ce premier compartiment du logement. La seconde partie 63 est ensuite introduite dans le second compartiment, par pressage selon une direction sensiblement perpendiculaire à la platine 1, c'est-à-dire sensiblement parallèle à la paroi 43 de manière à emboîter les bras d'assemblage 68 de la seconde partie 63 dans les passages d'assemblage 66 de la première partie 62. On introduit ensuite l'entretoise 7 dans le passage prévu à cet effet et formé par l'assemblage des deux parties 62 et 63.

Il est également possible de monter l'entretoise 7 sur l'une des deux parties 62 et 63 et d'insérer cet ensemble, par pressage, dans un compartiment du logement, selon une direction sensiblement parallèle à la paroi 43, puis de former le plot 5 entier en insérant la seconde partie du corps dans le second compartiment vide, autour de l'entretoise 7, comme précédemment indiqué.

La platine 1, comportant le plot 5 monté dans son logement, est ensuite fixée sur la carrosserie 10 du véhicule au moyen d'une vis 9 et d'un écrou 8 coopérant avec l'entretoise de serrage 7 du plot 5.

Selon un autre mode de réalisation, le corps n'a pas une section circulaire mais une section ovale et le logement a une forme adaptée pour recevoir le plot correspondant.

## Revendications

1. Dispositif de montage d'un système d'essuyage de véhicule automobile comportant une platine de fixation (1) qui est montée sur un véhicule automobile par l'intermédiaire d'une entretoise de serrage (7), maintenue serrée contre la carrosserie (10) d'un véhicule automobile et d'un plot de filtration (5), en matériau élastiquement déformable et capable d'absorber les vibrations, qui contient ladite entretoise (7) disposée longitudinalement, dont la surface externe comporte une gorge (61), sensiblement perpendiculaire à ladite entretoise (7) et qui coopère avec le bord d'une ouverture ménagée dans ladite platine (1) pour la fixation dudit plot de filtration (5) sur ladite platine (1), **caractérisé en ce que** ladite platine (1) comporte, en outre, une paroi de rigidification (43) qui épouse au moins partiellement la surface externe dudit plot (5) et forme un logement, sensiblement perpendiculaire à ladite platine (1), divisé en deux compartiments par une nervure interne (41) formée par le bord de ladite ouverture ménagée dans ladite platine (1), moyennant quoi l'amplitude des déformations dudit plot de filtration (5) est limitée à l'intérieur dudit logement.

2. Dispositif de montage selon la revendication 1, **caractérisé en ce que** ledit plot de filtration (5) est formé d'au moins deux parties (62 ; 63) s'imbriquant l'une dans l'autre

3. Dispositif de montage selon l'une des revendications 1 et 2, **caractérisé en ce qu'**au moins une desdites parties (62 ; 63) s'étend de part et d'autre de ladite nervure (41) interne.

4. Dispositif de montage selon l'une quelconque des revendications 1 à 3, **caractérisé en ce que** ledit matériau élastiquement déformable est du caoutchouc naturel.

5. Dispositif de montage selon l'une quelconque des revendications 1 à 4, **caractérisé en ce que** ledit plot (5) est formé de deux parties (62 ; 63) identiques qui comportent chacune une portion sensiblement cylindrique (64) qui remplit un des compartiments dudit logement et comporte une ouverture (67) sensiblement centrale pour ladite entretoise (7) et au moins deux passages d'assemblage (66), **en ce que** ladite portion sensiblement cylindrique (64) se prolonge selon son axe longitudinal par au moins deux bras d'assemblage (68), longitudinaux et disposés autour de ladite ouverture (67) sensiblement centrale entre lesdits bras d'assemblage (68) et qui coopèrent avec les passages d'assemblage (66) ménagés dans la portion sensiblement cylindrique (64) de l'autre partie de manière à former, par assemblage, ledit plot de filtration (5).

6. Dispositif de montage selon la revendication 5, **caractérisé en ce que** chacune desdites parties (62 ; 63) comporte trois bras d'assemblage (68) et trois passages d'assemblage (66).

7. Procédé d'assemblage d'un dispositif de montage d'un système d'essuyage d'un véhicule automobile selon l'une quelconque des revendications 2 à 6, **caractérisé en ce qu'**on insère, par pressage selon une direction sensiblement parallèle à ladite paroi de rigidification (43), au moins une desdites parties (62 ; 63) dudit plot (5) dans ledit premier ou second compartiment dudit logement, délimités par ladite nervure interne (41), **en ce qu'**on insère, ensuite, au moins une autre partie dans le compartiment vide, par pressage, selon une direction sensiblement parallèle à ladite paroi de rigidification (43), et **en ce qu'**on introduit par pressage selon une direction sensiblement parallèle à ladite paroi de rigidification (43), ladite entretoise de serrage (7) dans ledit plot (5) formé par lesdites deux parties (62 ; 63) assemblées dans ledit logement.

8. Procédé d'assemblage d'un dispositif de montage d'un système d'essuyage d'un véhicule automobile selon l'une quelconque des revendications 2 à 6, **caractérisé en ce que** l'on insère ladite entretoise de serrage (7) dans l'ouverture sensiblement centrale (67) ménagée dans une desdites parties (62 ; 63), **en ce qu'**on insère, par pressage selon une direction sensiblement parallèle à ladite paroi de rigidification (43), l'ensemble formé par ladite partie (62 ; 63) et ladite entretoise (7), dans un des deux compartiments dudit logement, délimités par ladite nervure interne (41), et **en ce qu'**on insère au moins une autre partie (62 ; 63) dans le compartiment vide, par pressage, selon une direction sensiblement parallèle à ladite paroi de rigidification (43) de manière à ce que ladite entretoise de serrage (7) traverse ledit plot (5) formé par lesdites deux parties (62 ; 63) assemblées dans ledit logement.
